Europäisches Patentamt

(19) European Patent Office

Office européen des brevets

(11) Publication number: **0 293 334 B1**

(12)

# EUROPEAN PATENT SPECIFICATION

(45) Date of publication of patent specification :
20.03.91 Bulletin 91/12

(51) Int. Cl.⁵ : **B60H 1/08, F01P 7/16,**
**F01P 7/08, F01P 5/04,**
**F01P 3/20**

(21) Application number : 88830172.8

(22) Date of filing : 26.04.88

(54) **A method and device for increasing the cooling of the coolant liquid of an internal combustion engine for motor vehicles.**

(30) Priority : 28.04.87 IT 6735487

(43) Date of publication of application :
30.11.88 Bulletin 88/48

(45) Publication of the grant of the patent :
20.03.91 Bulletin 91/12

(84) Designated Contracting States :
DE ES FR GB SE

(56) References cited :
DE-A- 3 602 228
FR-A- 85 080
US-A- 3 309 020
PATENT ABSTRACTS OF JAPAN, vol. 7, no. 98
(M-210)[1243], 26th April 1983; & JP-A-58 20
507 (MITSUBISHI JUKOGYO K.K.) 07-02-1983

(73) Proprietor : FIAT AUTO S.p.A.
Corso Giovanni Agnelli 200
I-10135 Torino (IT)

(72) Inventor : Gatto, Antonio
Via Galluppi, 21/17
I-10134 Torino (IT)

(74) Representative : Buzzi, Franco et al
c/o Jacobacci-Casetta & Perani S.p.A. Via
Alfieri, 17
I-10121 Torino (IT)

## Description

The present invention relates generally to the cooling circuits of internal combustion engines for motor vehicles, of the type set forth in the preamble of Claim 1.

An engine cooling and interior heating system of the above-mentioned type is known from US-A-3.309.020, wherein the valve means for regulating the flux of coolant liquid through the heater is controlled by a probe responsive to the air temperature.

Known is in the art, from FR-A-85.080, to control the motor of a fan for a radiator by a switch according to the temperature of the cooling water which indicates the motor temperature.

Also known in the art is, from JP-A-58 20507, a thermovalve conducting the warm water through a radiator when the water temperature becomes high.

In circuits of the aforesaid type, the components responsible for the removal of the heat from the coolant liquid (the main heat exchanger and its fan) are usually oversized, in order to ensure effective cooling even in conditions of particularly heavy use of the vehicle, such as, for example, when towing a trailer uphill in high ambient temperatures. Despite the extremely limited percentage of users interested in such uses, which in any case occur intermittently and for limited periods, the whole volume of production must be made adequate for these requirements with obvious disadvantages linked to the cost of the radiator unit of the circuit, to the inflexibility of the design of the front of the vehicle and its engine compartment which must provide a large housing for the radiator unit, and to its negative influence on the coefficient of aerodynamic resistance of the vehicle.

Moreover, this precautionary oversizing is not always able to ensure the necessary operative safety in the case of particular conditions of use of the vehicle, which are even more critical, though rare, such as, for example, in the case of idling while stationary for prolonged periods.

Finally, considerable difficulty can arise from the production point of view in the case of developments of the product which were not envisaged at the outset and which would require expensive redesigning of the front compartment of the vehicle.

The object of the present invention is to avoid the above disadvantages by means of a method and a device for increasing the cooling of the coolant liquid of an internal combustion engine for motor vehicles in a circuit of the type defined above, whilst keeping the size of the radiator unit (the main heat exchanger and its fan) within limits sufficient to ensure correct cooling of the liquid in normal running conditions of the vehicle.

The method according to the invention is defined in Claim 5.

In practice, the heater unit of the circuit is used as an additional radiating mass for the cooling of the coolant liquid in conditions of particularly heavy use of the vehicle (high loads with a low speed of travel) in which the temperature of the liquid might exceed the threshold value. In this case, the reversed air flow (that is, from the passenger compartment of the vehicle towards the outside) through the heater enables the excess heat of the coolant liquid to be removed effectively without altering the thermal comfort within the passenger compartment.

According to the invention, the above method is carried out by means of a device such as defined in Claim 1 and subclaims 2-4.

The preferred embodiment of the invention, which will now be described in detail with reference to the appended drawings provided by way of non-limiting example, has the advantage of being simple, functional and compact, and also enables relatively easy installation even in existing cooling circuits.

In the drawings :

Figure 1 is a diagrammatic view which shows in a simplified form the layout of a circuit for the coolant liquid of an internal combustion engine for motor vehicles, provided with a device according to the invention,

Figure 2 is a schematic sectional view of the device on an enlarged scale, and

Figure 3 shows the electrical layout of the device.

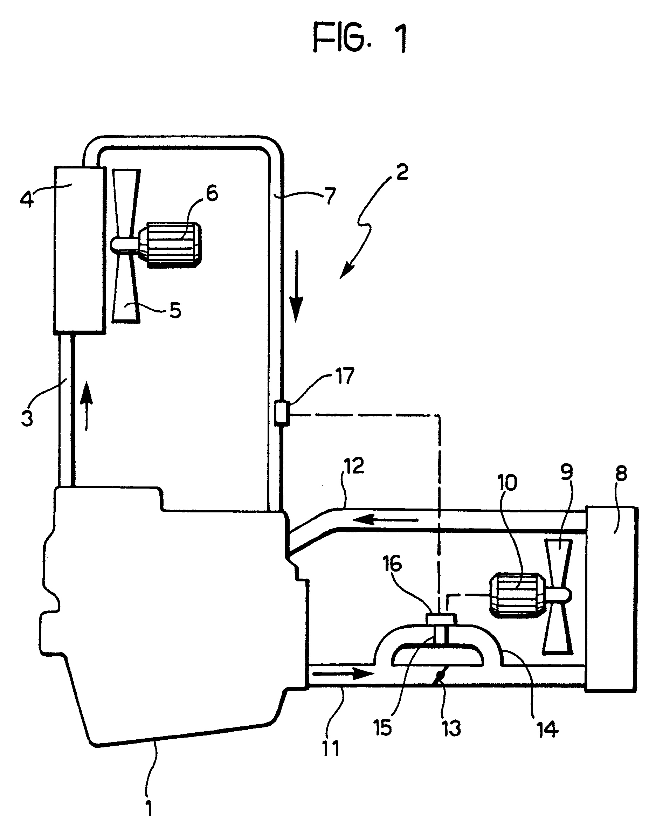

With reference initially to Figure 1, an internal combustion engine for motor vehicle is schematically indicated 1 and is provided with a cooling circuit, generally indicated 2, through with a coolant liquid circulates.

As well as passages within the engine 1, the circuit 2 includes a flow line 3 from the engine 1 to a main heat exchanger 4 with which a fan 5 driven by an electric motor 6 is operatively associated, and a return line 7 from the exchanger 4 to the engine 1.

The circuit 2 also includes a secondary heat exchanger 8 normally useable as the heater of the passenger compartment of the vehicle and with which a secondary fan 9 of axial type driven by an electric motor 10 is operatively associated. The heater 8 is connected to the circuit 2 by means of a flow line 11 and a return line 12. A regulating valve 13, which can be operated manually in known manner from within the passenger compartment, is inserted in the flow line 11 for enabling or preventing the passage of the coolant liquid through the heater 8. Also the motor 10 is manually operable from within the passenger compartment, again in known manner, so as to drive the fan 9 in the sense corresponding to the generation of a flow of air towards the passenger compartment. When the regulating valve 13 is in the open condition, the flow of air is heated as a result of its passage through the heater 8.

According to the invention, the flow line 11 has a by-pass passage 14 arranged in parallel with the regulating valve 13, in which is located a movable obturator 15 operated by means of an actuator 16 subject to a temperature sensor 17 situated in the circuit 2.

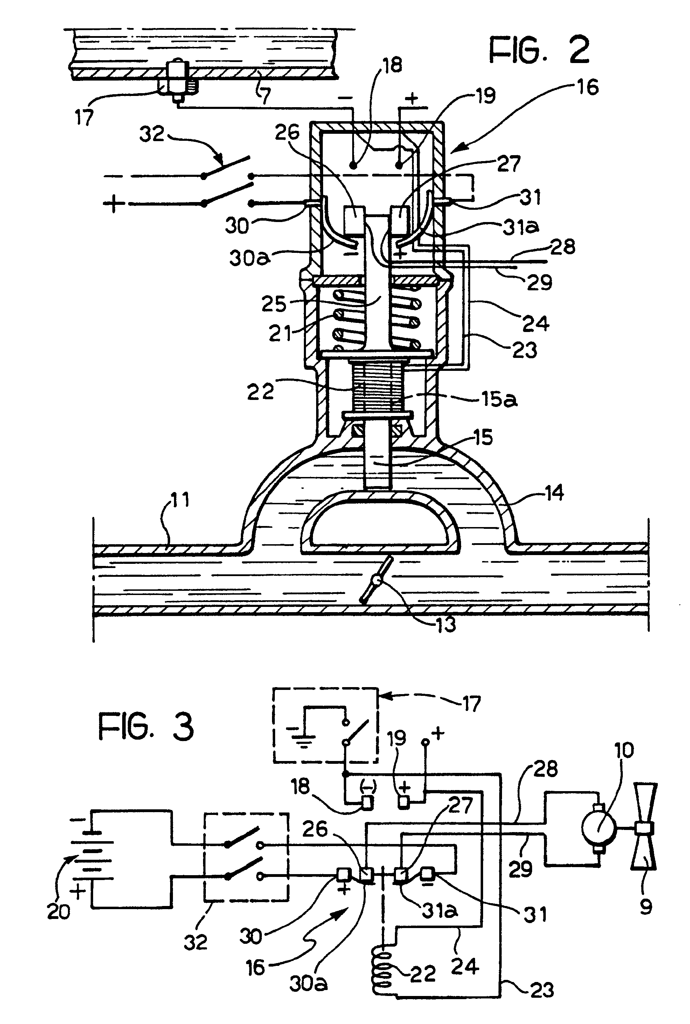

As can better be seen in Figures 2 and 3, in the embodiment illustrated, the temperature sensor 17 is preferably inserted in the return line 7 from the main radiator 4 to the engine 1 and, in practice, is constituted by a normally-open thermostatic switch connected to a fixed contact 18 inserted in the actuator 16. When the temperature of the cooling liquid within the line 7 exceeds a predetermined threshold value, the thermostatic switch 17 closes to connect the fixed contact 18 to earth. A fixed contact 19, also contained within the actuator 16, is associated with the latter contact and is permanently connected to an electrical supply source, that is, to the battery 20 of the vehicle.

In the embodiment illustrated, the actuator 16 is of electromagnetic type : it includes a core 15a which carries the obturator 15 and is subject to the action of a spring 21 tending to keep the obturator 15 in the closed position illustrated in Figure 2, and an excitation coil 22 connected to the fixed contacts 18 and 19 by means of conductors 23, 24.

The unit constituted by the core 15a and the obturator 15 carries, at the end opposite the latter, an insulating support 25 carrying two movable contacts 26, 27 connected by respective conductors 28, 29 to the terminals of the electric motor 10 of the fan 9.

Two further fixed contacts 30, 31 are housed in the actuator 16 and are supplied with a voltage by means of the normal manual switch, indicated 32, of the motor 10 of the fan 9. The polarity of the fixed contacts 30 and 31 is reversed relative to that of the fixed contacts 18 and 19. This means that the connection between the contacts 30 and 31 in the closed condition of the switch 32 causes rotation of the motor 10 and thus of the fan 9 in one sense, whilst the connection between the fixed contacts 18 and 19 causes rotation in the opposite sense. The first sense of rotation is the normal sense and corresponds, as stated, to the generation by the fan 9 of a forced flow of air through the heater 8 towards the passenger compartment of the vehicle, whilst the opposite sense of rotation obviously corresponds to the drawing of the flow of air from the passenger compartment towards the outside of the vehicle. In both cases, the air flow takes heat from the coolant liquid which is circulating through the heater 8 : however, whilst in the first case it is used for heating the passenger compartment, in the second case it fulfils solely the function of cooling the coolant liquid, without affecting the thermal conditions of the passenger compartment.

The movable contacts 26 and 27 open and close the fixed contacts 18, 19 and 30, 31 according to the position assumed by the obturator 15 in response to the control operated by the thermometric switch 17. When the temperature detected by the latter is less than the predetermined threshold value, the fixed contacts 18 and 19 are not supplied with voltage and the coil 22 is not excited, so that the obturator 15 is kept in the position of closure of the by-pass passage 14 by the action of the spring 21. In this situation, the movable contacts 26 and 27 bear against a pair of plates 30a and 31a projecting from the fixed contacts 30 and 31, which are thus electrically connected. The operation of the motor 10 in the sense corresponding to the generation of the flow of air towards the passenger compartment of the vehicle is therefore enabled by the closure of the switch 32. The passage of the coolant liquid towards the heater 8 can of course be controlled manually by operation of the regulating valve 13.

When the temperature of the coolant liquid exceeds the predetermined threshold value, the closure of the thermometric switch 17 supplies voltage to the fixed contacts 18 and 29, causing excitation of the coil 22. This causes the opening movement of the obturator 15 against the action of the spring 21, and consequently the passage of the coolant liquid through the by-pass passage 14 towards the heater 8. The simultaneous movement of the movable contacts 26 and 27 disconnects the fixed contacts 30 and 31, thus isolating the switch 32 from the motor 10, but connects the fixed contacts 18 and 19. As a result of this connection, the motor 10 drives the fan 9 in the opposite sense to the normal sense, removing heat from the coolant liquid flowing through the heater 8.

When the temperature of the liquid is brought back below the threshold value, the thermostatic switch 17 cuts off the voltage from the two contacts 18 and 19, deactivating the motor 10 and de-energising the coil 22. In this way, the initial conditions, corresponding to the closure of the obturator 15 and the enabling of the activation of the motor 10 in the normal sense of rotation, are re-established by means of the switch 32.

Naturally, the forms of embodiment and details of construction may be varied widely with respect to those described and illustrated, without thereby departing from the scope of the present invention as defined by the appended claims.

Thus, for example, the actuator 16 could be of the electrically-heated bimetal or the vacuum-operated type instead of the electromagnetic type. Moreover, the functions of opening and closing the obturator 15 and of reversing the polarity and supply of the motor 10 of the fan 9 could be fulfilled by respective separate devices instead of by a single actuator.

## Claims

1. A device for increasing the cooling of the coolant liquid of an internal combustion engine (1) for motor vehicles in a circuit (2) including a main heat exchanger (4) with which a main fan (5) is operatively associated, and a secondary heat exchanger (8) which is adapted to act as the heater of the passenger compartment of the vehicle and with which are associated a regulating valve (13) operable to regulate the passage of the liquid through the heater, and a secondary electric fan (9) which can be activated manually in the sense corresponding to the generation of a flow of air heated by the heater towards the passenger compartment of the vehicle, and further comprising means (17) for sensing the temperature of the coolant liquid, and heat-responsive valve means for automatically regulating the flux of the coolant liquid through the heater (8), characterised in that the said valve means comprise opening and closing means (15, 21, 15a, 22) controlled by the said sensor means (17) for automatically opening the passage for the liquid through the heater (8) when the temperature of the coolant liquid detected by the sensor means exceeds a predetermined threshold value, and closing the passage when the temperature of the coolant liquid detected falls below the threshold value, and in that means (26, 27, 18, 19) are provided automatically activating the secondary electric fan (9, 10) simultaneously with the operation of the opening means (15, 15a, 22) in the opposite sense to the sense corresponding to the generation of the flow of heated air towards the passenger compartment, and for deactivating the secondary electric fan (9, 10) simultaneously with the operation of the closing means (15, 21).

2. A device according to Claim 1, characterised in that the opening and closing means (15, 21, 15a, 22) are distinct and independent from the regulating valve (13).

3. A device according to Claim 1 or Claim 2, characterised in that it also includes means (26, 27, 30, 31) for preventing the manual activation of the secondary electric fan (9, 10) in the sense corresponding to the generation of the flow of air towards the passenger compartment of the vehicle when the means (15, 15a, 22) for opening the passage for the liquid through the heater (8) are in the operating condition.

4. A device according to Claims 1 to 3, wherein the heater is connected to a line for supplying the liquid in which the regulating valve is inserted, characterised in that the temperature sensing means are constituted by a thermometric switch (17) and in that it includes a by-pass passage (14) which is connected to the supply line (11) in parallel with the regulating valve (13) and through which is movable a normally-closed obturator (15) whose opening is effected by an actuator (16) controlled by the thermostatic switch (17); the obturator (15) carrying a pair of movable contacts (26, 27) which cooperate with a first pair of fixed contacts (30, 30a; 31, 31a) for enabling the manual activation of the secondary electric fan (9, 10) in the sense corresponding to the generation of the flow of air towards the passenger compartment of the vehicle, when the obturator (15) is in the closed position, and with a second pair of fixed contacts (18, 19) for activating the secondary electric fan (9, 10) in the opposite sense and preventing its manual activation, when the obturator (15) is in the open position.

5. A method for increasing the cooling of the coolant liquid of an internal combustion engine (1) for motor vehicles in a circuit (2) including a main heat exchanger (4) with which a main fan (5) is operatively associated, and a secondary heat exchanger (8) which is adapted to act as the heater of the passenger compartment of the vehicle and with which are associated a regulating valve (13) operable to regulate the passage of the liquid through the heater, and a secondary electric fan (9) which can be activated manually in the sense corresponding to the generation of a flow of air heated by the heater towards the passenger compartment of the vehicle, characterised in that it consists of detecting the temperature of the coolant liquid in the circuit (2), automatically opening the passage for the liquid through the heater (8) and automatically activating the secondary electric fan (9), in the opposite sense to the sense corresponding to the generation of the flow of heated air towards the passenger compartment, when the detected temperature of the coolant liquid exceeds a predetermined threshold value, and automatically deactivating the secondary electric fan (9) and automatically closing the passage for the liquid through the heater (8) when the detected temperature of the coolant liquid falls below the threshold value.

## Ansprüche

1. Vorrichtung zur Erhöhung der Kühlung der Kühlflüssigkeit eines Kraftfahrzeug-Verbrennungsmotors (1) in einem Kreis (2) mit einem Haupt-Wärmetauscher (4), dem ein Hauptlüfter (5) wirkungsmäßig zugeordnet ist, und einem sekundären Wärmetauscher (8), der als Heizkörper für den Fahrgastraum des Fahrzeugs dienen kann und dem ein Regelventil (13) zur Regelung des Flüssigkeitsdurchgangs durch den Heizkörper und ein sekundärer elektrischer Lüfter (9) zugeordnet sind, der so betrieben werden kann, daß er eine Strömung von durch den Heizkörper erwärmter Luft in den Fahrgastraum des Fahrzeugs erzeugt, ferner mit Sensormitteln (17) zur Erfassung der Temperatur der Kühlflüssigkeit und mit auf Wärme reagierenden Ventilmitteln zur automatischen Regelung der Kühlflüssigkeitsströmung durch den Heizkörper (8), **dadurch gekennzeichnet**, daß die Ventilmittel Mittel (15, 21, 15a, 22) zum Öffnen und Schließen umfassen, die von den Sensormitteln (17) derart steuerbar sind, daß sie den Durchgang für die Flüssigkeit durch den Heizkörper (8) automatisch öffnen, wenn die von den Sensormitteln erfaßte Temperatur der Kühlflüssigkeit einen vorbestimmten Schwellwert überschreitet, und den Durchgang sperren, wenn die erfaßte Temperatur der Kühlflüssigkeit unter den Schwellwert absinkt und daß Mittel (26, 27, 18, 19) vorgesehen sind, die den sekundären elektrischen Lüfter (9, 10) gleichzeitig mit der Betätigung der Öffnungsmittel (15, 15a, 22) automatisch in der Richtung aktivieren, die der der Erzeugung der Warmluftströmung in den Fahrgastraum entgegengesetzten Richtung entspricht, und die den sekundären elektrischen Lüfter (9, 10) gleichzeitig mit der Betätigung der Schließmittel (15, 21) deaktivieren.

2. Vorrichtung nach Anspruch 1, dadurch gekennzeichnet, daß die Öffnungs- und Schließmittel (15, 21, 15a, 22) von dem Regelventil (13) getrennt und unabhängig sind.

3. Vorrichtung nach Anspruch 1 oder 2, gekennzeichnet durch Mittel (26, 27, 30, 31), die die manuelle Aktivierung des sekundären elektrischen Lüfters (9, 10) in der der Erzeugung der Luftströmung zu dem Fahrgastraum des Fahrzeugs entsprechenden Richtung verhindern, wenn die Mittel (15, 15a, 22) zum Öffnen des Durchgangs für die Flüssigkeit durch den Heizkörper (8) in Funktion sind.

4. Vorrichtung nach Anspruch 1 bis 3, bei der der Heizkörper mit einer Leitung zur Zuführung der Flüssigkeit verbunden ist, in die das Regelventil eingefügt ist, dadurch gekennzeichnet, daß die Sensormittel zur Erfassung der Temperatur aus einem Thermostatschalter (17) bestehen, daß ein Bypass-Durchgang (14) vorgesehen ist, der parallel zu dem Regelventil (13) mit der Zuführungsleitung (11) verbunden ist und durch den ein normalerweise geschlossenes Absperrglied (15) bewegbar ist, dessen Öffnen durch ein von dem Thermostatschalter (17) gesteuertes Betätigungsglied (16) erfolgt, und daß das Absperrglied (15) zwei bewegliche Kontakte (26, 27) trägt, die mit einem ersten Paar von festen Kontakten (30, 30a; 31, 31a) zusammenwirken, um die manuelle Aktivierung des sekundären elektrischen Lüfters (9, 10) in der Richtung zu ermöglichen, die der Erzeugung des Luftstroms zu dem Fahrgastraum des Fahrzeugs entspricht, wenn das Absperrglied sich in Schließstellung befindet, sowie mit einem zweiten Paar von festen Kontakten (18, 19), zur Aktivierung des sekundären elektrischen Lüfters (9, 10) in der entgegengesetzten Richtung und Verhinderung seiner manuellen Aktivierung, wenn das Absperrglied (15) sich in Öffnungsstellung befindet.

5. Verfahren zur Erhöhung der Kühlung der Kühlflüssigkeit eines Kraftfahrzeug-Verbrennungsmotors (1) in einem Kreis (2) mit einem Haupt-Wärmetauscher (4), dem ein Hauptlüfter (5) wirkungsmäßig zugeordnet ist, und einem sekundären Wärmetauscher (8), der als Heizkörper für den Fahrgastraum des Fahrzeugs dienen kann und dem ein Regelventil (13) zur Regelung des Flüssigkeitsdurchgangs durch den Heizkörper und ein sekundärer elektrischer Lüfter (9) zugeordnet sind, der so betrieben werden kann, daß er eine Strömung von durch den Heizkörper erwärmter Luft in den Fahrgastraum des Fahrzeugs erzeugt, **dadurch gekennzeichnet**, daß die Temperatur der Kühlflüssigkeit in dem Kreis (2) erfaßt wird, daß der Durchgang der Kühlflüssigkeit durch den Heizkörper (8) automatisch geöffnet und der sekundäre elektrische Lüfter (9) automatisch in der Richtung aktiviert wird, die der Richtung entgegengesetzt ist, die der Erzeugung der Warmluftströmung in den Fahrgastraum entspricht, wenn die von den Sensormitteln erfaßte Temperatur der Kühlflüssigkeit einen vorbestimmten Schwellwert überschreitet, daß der sekundäre elektrische Lüfter (9) automatisch deaktiviert wird und daß der Durchgang für die Kühlflüssigkeit durch den Heizkörper (8) automatisch gesperrt wird, wenn die erfaßte Temperatur der Kühlflüssigkeit unter den Schwellwert absinkt.

**Revendications**

1. Dispositif destiné à augmenter le refroidissement du liquide de refroidissement d'un moteur à combustion interne (1) pour des véhicules à moteur dans un circuit (2) comportant un échangeur de chaleur principal (4) avec lequel un ventilateur principal (5) est associé de manière opérationnelle, et un échangeur de chaleur secondaire (8) prévu pour agir comme dispositif de chauffage du compartiment passager du véhicule et avec lequel sont associés une soupape de régulation (13) destinée à réguler le passage du liquide au travers du dispositif de chauffage, un ventilateur électrique secondaire (9) qui peut être activé manuellement dans le sens correspondant à la génération d'un écoulement d'air chauffé par le dispositif de chauffage vers le compartiment passager du véhicule, et comportant en outre des moyens (17) destinés à détecter la température du liquide de refroidissement, et des moyens formant soupape sensibles à la chaleur destinés à réguler automatiquement le flux du liquide de refroidissement au travers du dispositif de chauffage (8), caractérisé en ce que les dits moyens formant soupape comportent des moyens d'ouverture et de fermeture (15, 21, 15a, 22) commandés par les dits moyens formant capteur (17) destinés à ouvrir automatiquement le passage pour le liquide au travers du dispositif de chauffage (8) lorsque la température du liquide de refroidissement détectée par les moyens formant capteur dépasse une valeur de seuil prédéterminée, et à fermer le passage lorsque la température du liquide de refroidissement détectée tombe en dessous de la valeur de seuil, et en ce que des moyens (26, 27, 18, 19) sont prévus pour activer automatiquement le ventilateur électrique secondaire (9, 10) simultanément à l'actionnement des moyens d'ouverture (15, 15a, 22) dans le sens opposé au sens correspondant à la génération de l'écoulement d'air chauffé vers le compartiment passager, et pour désactiver le ventilateur électrique secondaire (9, 10) simultanément à l'actionnement des moyens de fermeture (15, 21).

2. Dispositif selon la revendication 1, caractérisé en ce que les moyens d'ouverture et de fermeture (15, 21, 15a, 22) sont distincts et indépendants de la soupape de régulation (13).

3. Dispositif selon la revendication 1 ou la revendication 2, caractérisé en ce qu'il comporte également des moyens (26, 27, 30, 31) destinés à empêcher l'activation manuelle du ventilateur électrique secondaire (9, 10) dans le sens correspondant à la génération d'un écoulement d'air vers le compartiment passager du véhicule lorsque les moyens (15, 15a, 22) destinés à ouvrir le passage pour le liquide au travers du dispositif de chauffage (8) sont dans l'état de fonctionnement.

4. Dispositif selon les revendications 1 à 3, dans lequel le dispositif de chauffage est relié à une conduite destinée à délivrer le liquide dans laquelle est insérée la soupape de régulation, caractérisé en ce que les moyens de détection de température sont constitués par un contacteur thermométrique (17) et en ce qu'il comporte un passage de dérivation (14) qui est relié à la conduite d'alimentation (11) en parallèle avec la soupape de régulation (13) et au travers duquel est mobile un obturateur normalement fermé (15) dont l'ouverture est effectuée par un dispositif d'actionnement (16) commandé par le contacteur thermométrique (17) ; l'obturateur (15) portant une paire de contacts mobiles (26, 27) qui coopèrent avec une première paire de contacts fixes (30, 30a ; 31, 31a) afin de permettre l'activation manuelle du ventilateur électrique secondaire (9, 10) dans le sens correspondant à la génération d'un écoulement d'air vers le compartiment passager du véhicule, lorsque l'obturateur (15) est dans la position fermée, et avec une deuxième paire de contacts fixes (18, 19) afin d'activer le ventilateur électrique secondaire (9, 10) dans le sens opposé et empêcher son activation manuelle, lorsque l'obturateur (15) est dans la position ouverte.

5. Procédé destiné à augmenter le refroidissement du liquide de refroidissement d'un moteur à combustion interne (1) pour des véhicules à moteur dans un circuit (2) comportant un échangeur de chaleur principal (4) avec lequel un ventilateur principal (5) est associé de manière opérationnelle, et un échangeur de chaleur secondaire (8) prévu pour agir comme dispositif de chauffage du compartiment passager du véhicule et avec lequel sont associés une soupape de régulation (13) destinée à réguler le passage du liquide au travers du dispositif de chauffage, et un ventilateur électrique secondaire (9) qui peut être activé manuellement dans le sens correspondant à la génération d'un écoulement d'air chauffé par le dispositif de chauffage vers le compartiment passager du véhicule, caractérisé en ce qu'il consiste à détecter la température du liquide de refroidissement dans le circuit (2), à ouvrir automatiquement le passage pour le liquide au travers du dispositif de chauffage (8) et à activer automatiquement le ventilateur électrique secondaire (9), dans le sens opposé au sens correspondant à la génération de l'écoulement d'air chauffé vers le compartiment passager, lorsque la température détectée du liquide de refroidissement dépassé une valeur de seuil, et à désactiver automatiquement le ventilateur électrique secondaire (9) et fermer automatiquement le passage pour le liquide au travers du dispositif de chauffage (8) lorsque la température du liquide de refroidissement détectée tombe en dessous de la valeur de seuil.

# FIG. 1

FIG. 2

FIG. 3